# EUROPEAN PATENT SPECIFICATION

(11) **EP 1 628 068 B1**
(45) Date of publication and mention of the grant of the patent: **27.07.2011**
(21) Application number: 05008574.5
(22) Date of filing: 20.04.2005
(51) Int. Cl.: F16L 59/14, B29C 44/12

(54) **Method and apparatus for installing subsea insulation**
Verfahren und Vorrichtung zum Anbringen einer Unterwasserisolation
Procédé et appareil pour l'instalation d'une isolation sous-marine

(30) Priority: 20.08.2004 US 922418
(43) Date of publication of application: 22.02.2006
(73) Proprietor: Saipem America Inc., Houston, TX 77084-5102 (US)
(72) Inventor: Bath, Wiliam R., Cypress Texas 77410 (US); Sclocchi, Marco, Houston Texas 77008 (US)
(74) Representative: Clarkson, Paul Magnus

(56) References cited:
- WO-A-03/102105
- US-A- 5 052 859
- US-A1- 2003 010 499
- US-A1- 2004 081 766

## Description

### BACKGROUND OF THE INVENTION

The present invention relates generally to a method and apparatus for installing insulation on subsea oil and gas flowlines, connectors and other equipment.

Subsea oil and gas wells are constantly exposed to cold seawater that can often times be just a few degrees above freezing. Subsea oil production often leaves the well at much higher temperatures, sometimes exceeding 148.9°C (300 degrees Fahrenheit). When the flow of oil is interrupted for any reason, the production fluid in the flowline begins to cool. If the production fluid was allowed to sufficiently cool, oil production could be completely stopped due to the formation of hydrates or paraffin blocks that can form in the flowline and connectors, inhibiting resumption of the flow of the fluid.

It is therefore desirable to insulate the subsea production flowline connectors to maintain the much hotter temperature of the oil and gas production. This is commonly done with rigid covers, commonly referred to as "dog houses" in the industry. These dog houses are placed around the flowline connectors or other equipment to be insulated, and have proven to do a less than adequate job of insulation. However, one key disadvantage of using dog houses is that because they are rigid covers, seawater is able to flow through gaps between the cover and the insulated flowline or equipment. This water flow allows heat to escape, thereby reducing the effectiveness of the insulation.

It would therefore be desirable to develop a system that can install insulation on subsea flowline, connectors or equipment without reducing the effectiveness of the insulation.

### SUMMARY OF THE INVENTION

Provided herein is a system and apparatus for installing subsea insulation on subsea flowlines, connectors and equipment. This system provides a lightweight, thin mold designed and built to suit the parameters of the subsea item to be insulated. The mold fits and seals around the area to be insulated, and is then injected with an insulation material by a remotely operated vehicle (ROV). The insulation material is injected as a liquid solution, thereby avoiding the presence of gaps in the insulation. This liquid solution is a combination of an insulation solution and a catalyst mixed together during the injection process. The mixture is then allowed to solidify, forming the molded insulation.

### DESCRIPTION OF ILLUSTRATIVE EMBODIMENTS

One embodiment of the present invention first uses a subsea gel insulation mold. This mold is a pre-engineered fiberglass, plastic or metal enclosure, the purpose of which is to fit around the subsea flowline, connector or other equipment to be insulated. Generally, the mold will comprise a hinged enclosure that is closed and secured around the item to be insulated. In one embodiment, the mold comprises gaskets to provide a tight seal between the mold and the item to be insulated. The mold can either be preinstalled on the flowline, connector or other equipment to be insulated, or it can be installed by a remotely operated vehicle (ROV). The process of installing the subsea gel insulation mold with an ROV involves deploying the ROV to the site of the item to be insulated, and using the ROV to install the mold. In one embodiment, the mold is attached to the ROV itself, however if multiple molds are needed, a separate mold deployment skid can be provided to supply the multiple molds.

Also provided is a subsea insulation solution reservoir skid, which is deployed separately from the ROV in the vicinity of the subsea insulation installation site. The subsea insulation solution reservoir skid comprises a flexible insulation solution reservoir and a hose for delivering the insulation solution.

One embodiment of the present invention involves the use of a subsea gel injection system. This system is a remotely operated package integrated within the frame of the ROV, or provided as a separate skid mounted under the ROV, depending upon the number of injection molds to be filled and the insulation solution/catalyst ratio provided. The subsea gel injection system comprises a pump module, which itself comprises separate pumps for the insulation solution and the catalyst. The system also uses a mixing nozzle with an injection hose fitted with a single port hot stab for mixing the insulation solution and catalyst upon injection of the mixture into the mold installed around the subsea flowline, connector or equipment to be insulated. Finally, the system comprises a catalyst reservoir for containing the catalyst prior to its injection into the mold.

In one method of the present invention, the insulation solution is pumped into the flexible bladder on the subsea insulation solution reservoir skid, and the catalyst is pumped into the catalyst reservoir on the subsea gel injection system skid. The pump module of the subsea gel injection skid is connected to the ROV system so as to draw power from the ROV system. For instance, if the pumps are hydraulic pumps, then they are connected to the ROV hydraulic system, however if the pumps are electric, then they would be connected to the ROV electrical system. The mixing nozzle is then connected to the pump module, and the injection hose and hot stab are installed near the ROV manipulator. The molds are either installed on the ROV skid or on the separate mold deployment skid, along with the mold installation tool.

The insulation solution reservoir and mold deployment skids are lowered from the water surface to the sea floor on separate surface deployed lift lines and placed near the work site. The ROV, such as, for example, the INNOVATOR® manufactured by Sonsub Inc. of Houston, Texas, is then launched and lowered to the work site. The process of installing the insulation can then begin.

First, the ROV flies to the mold deployment skid and uses its manipulator to connect a hydraulic hot stab to the mold installation tool. The ROV grab arm then picks up the mold installation tool and maneuvers the installation tool over a mold on the mold deployment skid. The hydraulic hot stab powers the installation tool to grab the mold and disconnect the mold from the skid. The ROV then flies the mold over to the flowline, connector or other equipment to be insulated, where the installation tool locks the mold around the flowline, connector or other equipment to be insulated.

The ROV then returns the installation tool to the mold deployment skid, after which the ROV flies to the insulation solution reservoir skid. The ROV pulls the hose on the insulation solution reservoir skid over to the area of the mold, and then uses its manipulator to connect the insulation solution reservoir hose hot stab to the gel pump. The ROV manipulator then connects the mixing nozzle hose to the mold receptacle, and starts up the catalyst and insulation solution pumps to pump the catalyst and insulation solution through the mixing nozzle and into the mold. After the mold is filled with the insulation solution/catalyst mixture, the catalyst pump is disengaged, and a small quantity of insulation solution is pumped through the mixing nozzle to clean out the mixed solution, preventing insulation gel from curing and hardening within the mixing nozzle. The ROV manipulator then disconnects the injection hose, and is now ready to install the next mold. Once all the molds are installed, the ROV, mold skid, and insulation solution reservoir skid are recovered to the surface.

Insulation gel for use in the present invention is known in the art. One type of the insulation gel described above, in which an insulation solution is mixed with a catalyst upon injection into the mold, is DEEPGEL(TM) offered by Ythan Environmental Services Ltd. However, any type of insulation that is injectable into a mold and allowed to cure or harden can be used in the present invention. Some such insulations may not require the use of a catalyst for hardening the insulation, in which case there would be no need for a catalyst container or catalyst pump, thereby reducing the amount of equipment to perform the method and build the apparatus of the present invention.

While the apparatuses and methods of the present invention have been described in terms of preferred embodiments, it will be apparent to those of skill in the art that variations may be applied to what has been described herein without departing from the concept and scope of the invention as it is set out in the following claims.

## Claims

1. An apparatus for installing subsea insulation using a remotely operated vehicle comprising:
- a storing means for separately storing insulation solution and catalyst;
- a molding means for molding insulation material; and
- an injecting means **characterized in that** the injecting means comprises a mixing nozzle for simultaneously injecting the stored insulation solution and catalyst into the molding means.

2. The apparatus of claim 1 wherein the molding means comprises a subsea gel insulation mold.

3. The apparatus of claim 2 wherein the storing means comprises a subsea insulation solution reservoir skid.

4. The apparatus of claim 3 wherein the injecting means comprises a subsea gel injection system.

5. The apparatus of claim 4, wherein the subsea gel insulation mold is selected from the group consisting of a pre-engineered fiberglass enclosure, a plastic enclosure, and a metal enclosure.

6. The apparatus of claim 4 or claim 5, wherein the subsea gel insulation mold is a hinged enclosure.

7. The apparatus of any one of claims 4 to 6, wherein the subsea gel insulation mold comprises gaskets, wherein the gaskets provide a tight seal between the subsea gel insulation mold and an item to be insulated.

8. The apparatus of any one of claims 4 to 7, wherein the subsea gel insulation mold is preinstalled on an item to be insulated.

9. The apparatus of any one of claims 4 to 7, wherein the subsea gel insulation mold is installed by the remotely operated vehicle.

10. The apparatus of any one of claims 4 to 9, further comprising multiple gel insulation molds and a mold deployment skid for the multiple gel insulation molds.

11. The apparatus any one of claims 4 to 10, wherein the subsea insulation solution reservoir skid comprises a flexible gel reservoir for supplying insulation solution and a hose for delivering the insulation solution.

12. The apparatus of any one of claims 4 to 11, wherein the subsea gel injection system is integrated within the frame of the remotely operated vehicle.

13. The apparatus of any one of claims 4 to 12, wherein the subsea gel injection system is provided on a skid separate from the remotely operated vehicle.

14. The apparatus of claim 13, wherein the subsea gel injection system skid is mounted to the remotely operated vehicle.

15. The apparatus of any one of claims 4 to 14, further comprising an insulation solution pump.

16. The apparatus of any one of claims 4 to 15, further comprising a catalyst pump.

17. The apparatus of any one claims 4 to 16, further comprising a catalyst reservoir.

18. A method for installing subsea insulation comprising:
- installing a subsea gel insulation mold on an item to be insulated; and
- using a remotely operated vehicle to pump insulation solution and catalyst into the subsea gel insulation mold **characterized in that** the insulation solution and catalyst are pumped simultaneously into the subsea gel insulation mold through a mixing nozzle.

19. The method of claim 18, wherein the remotely operated vehicle installs the subsea gel insulation mold on the item to be insulated.

20. The method of claim 18 or claim 19, wherein the subsea gel insulation mold is selected from the group consisting of a pre-engineered fiberglass enclosure, a plastic enclosure, and a metal enclosure.

21. The method of any one of claims 18 to 20, wherein the insulation solution is provided by a subsea insulation solution reservoir skid.

22. The method of any one of claims 18 to 21, wherein the insulation solution and catalyst are pumped into the subsea gel insulation mold using an insulation solution pump for pumping the insulation solution and a catalyst pump for pumping the catalyst.

23. The method of any one of claims 18 to 22, wherein the subsea gel insulation mold is a hinged enclosure.

24. The method of any one of claims 18 to 23, wherein the subsea gel insulation mold comprises gaskets, wherein the gaskets provide a tight seal between the subsea gel insulation mold and the item to be insulated.

25. The method of any one of claims 18 to 24, wherein the subsea gel insulation molds are provided by a mold deployment skid.

26. The method of any one of claims 18 to 25, wherein insulation solution and catalyst are pumped from a subsea gel injection system.

27. The method of claim 26, wherein the subsea gel injection system is integrated within the frame of the remotely operated vehicle.

28. The method of claim 26, wherein the subsea gel injection system is provided on skid separate from the remotely operated vehicle.

29. The method of claim 28, wherein the subsea gel injection system skid is mounted to the remotely operated vehicle.

## Patentansprüche

1. Vorrichtung zum Anbringen von Unterwasserisolierung mit Hilfe eines ferngelenkten Fahrzeugs, die aufweist:
- eine Lagereinrichtung zum getrennten Lagern von Isolierlösung und Katalysator;
- eine Formeinrichtung zum Formen von Isoliermaterial; und
- eine Einspritzeinrichtung, **dadurch gekennzeichnet, dass** die Einspritzeinrichtung eine Mischdüse zum gleichzeitigen Einspritzen der gelagerten Isolierlösung und des Katalysators in die Formeinrichtung aufweist.

2. Vorrichtung nach Anspruch 1, wobei die Formeinrichtung eine Unterwasserisoliergelform aufweist.

3. Vorrichtung nach Anspruch 2, wobei die Lagereinrichtung einen Unterwasserisolierlösungs-Speicherschlitten aufweist.

4. Vorrichtung nach Anspruch 3, wobei die Einspritzeinrichtung ein Unterwassergel-Einspritzsystem aufweist.

5. Vorrichtung nach Anspruch 4, wobei die Unterwasserisoliergelform aus der Gruppe ausgewählt ist, die aus einer vorgefertigten Glasfaserhülle, einer Kunststoffhülle und einer Metallhülle besteht.

6. Vorrichtung nach Anspruch 4 oder Anspruch 5, wobei die Unterwasserisoliergelform eine Klapphülle ist.

7. Vorrichtung nach einem der Ansprüche 4 bis 6, wobei die Unterwasserisoliergelform Dichtungen aufweist, wobei die Dichtungen für eine feste Abdichtung zwischen der Unterwasserisoliergelform und einem zu isolierenden Gegenstand sorgen.

8. Vorrichtung nach einem der Ansprüche 4 bis 7, wobei die Unterwasserisoliergelform an einem zu isolierenden Gegenstand vorab angebracht ist.

9. Vorrichtung nach einem der Ansprüche 4 bis 7, wobei die Unterwasserisoliergelform durch das ferngelenkte Fahrzeug angebracht ist.

10. Vorrichtung nach einem der Ansprüche 4 bis 9, ferner mit mehreren Isoliergelformen und einem Formanlieferungsschlitten für die mehreren Isoliergel-Formen.

11. Vorrichtung nach einem der Ansprüche 4 bis 10, wobei der Unterwasserisolierlösungs-Speicherschlitten einen flexiblen Gelspeicher zum Zuführen von Isolierlösung und einen Schlauch zum Abgeben der Isolierlösung aufweist.

12. Vorrichtung nach einem der Ansprüche 4 bis 11, wobei das Unterwassergel-Einspritzsystem in den Rahmen des ferngelenkten Fahrzeugs integriert ist.

13. Vorrichtung nach einem der Ansprüche 4 bis 12, wobei das Unterwassergel-Einspritzsystem auf einem vom ferngelenkten Fahrzeug getrennten Schlitten vorgesehen ist.

14. Vorrichtung nach Anspruch 13, wobei der Unterwassergel-Einspritzsystemschlitten am ferngelenkten Fahrzeug angeordnet ist.

15. Vorrichtung nach einem der Ansprüche 4 bis 14, ferner mit einer Isolierlösungspumpe.

16. Vorrichtung nach einem der Ansprüche 4 bis 15, ferner mit einer Katalysatorpumpe.

17. Vorrichtung nach einem der Ansprüche 4 bis 16, ferner mit einem Katalysatorspeicher.

18. Verfahren zum Anbringen von Unterwasserisolierung, das aufweist:
- Anbringen einer Unterwasserisoliergelform an einem zu isolierenden Gegenstand; und
- Verwenden eines ferngelenkten Fahrzeugs, um Isolierlösung und Katalysator in die Unterwasserisoliergelform zu pumpen, **dadurch gekennzeichnet, dass** die Isolierlösung und der Katalysator durch eine Mischdüse gleichzeitig in die Unterwasserisoliergelform gepumpt werden.

19. Verfahren nach Anspruch 18, wobei das ferngelenkte Fahrzeug die Unterwasserisoliergelform am zu isolierenden Gegenstand anbringt.

20. Verfahren nach Anspruch 18 oder Anspruch 19, wobei die Unterwasserisoliergelform aus der Gruppe ausgewählt wird, die aus einer vorgefertigten Glasfaserhülle, einer Kunststoffhülle und einer Metallhülle besteht.

21. Verfahren nach einem der Ansprüche 18 bis 20, wobei die Isolierlösung durch einen Unterwasserisolierlösungs-Speicherschlitten bereitgestellt wird.

22. Verfahren nach einem der Ansprüche 18 bis 21, wobei die Isolierlösung und der Katalysator mit Hilfe einer Isolierlösungspumpe zum Pumpen der Isolierlösung und einer Katalysatorpumpe zum Pumpen des Katalysators in die Unterwasserisoliergelform gepumpt werden.

23. Verfahren nach einem der Ansprüche 18 bis 22, wobei die Unterwasserisoliergelform eine Klapphülle ist.

24. Verfahren nach einem der Ansprüche 18 bis 23, wobei die Unterwasserisoliergelform Dichtungen aufweist, wobei die Dichtungen für eine feste Abdichtung zwischen der Unterwasserisoliergelform und dem zu isolierenden Gegenstand sorgen.

25. Verfahren nach einem der Ansprüche 18 bis 24, wobei die Unterwasserisoliergelformen durch einen Formanlieferungsschlitten bereitgestellt werden.

26. Verfahren nach einem der Ansprüche 18 bis 25, wobei Isolierlösung und Katalysator aus einem Unterwassergel-Einspritzsystem gepumpt werden.

27. Verfahren nach Anspruch 26, wobei das Unterwassergel-Einspritzsystem in den Rahmen des ferngelenkten Fahrzeugs integriert ist.

28. Verfahren nach Anspruch 26, wobei das Unterwassergel-Einspritzsystem auf einem vom ferngelenkten Fahrzeug getrennten Schlitten vorgesehen ist.

29. Verfahren nach Anspruch 28, wobei der Unterwassergel-Einspritzsystemschlitten am ferngelenkten Fahrzeug angeordnet ist.

## Revendications

1. Appareil pour installer une isolation sous-marine en utilisant un véhicule actionné à distance, comprenant :
des moyens de stockage pour stocker séparément une solution d'isolation et un catalyseur ;
des moyens de moulage pour mouler le matériau d'isolation ; et
des moyens d'injection **caractérisé en ce que** les moyens d'injection comprennent une buse de mélange pour injecter simultanément la solution d'isolation stockée et le catalyseur dans les moyens de moulage.

2. Appareil selon la revendication 1, dans lequel les moyens de moulage comprennent un moule de gel isolant sous-marin.

3. Appareil selon la revendication 2, dans lequel les moyens de stockage comprennent un châssis mobile du réservoir de solution d'isolation sous-marine.

4. Appareil selon la revendication 3, dans lequel les moyens d'injection comprennent un système d'injection de gel sous-marin.

5. Appareil selon la revendication 4, dans lequel le moule de gel isolant sous-marin est choisi parmi le groupe comprenant une enceinte en fibre de verre préfabriquée, une enceinte en plastique et une enceinte en métal.

6. Appareil selon la revendication 4 ou la revendication 5, dans lequel le moule de gel isolant sous-marin est une enceinte articulée.

7. Appareil selon l'une quelconque des revendications 4 à 6, dans lequel le moule de gel sous-marin isolant comprend des joints, dans lequel les joints fournissent un joint d'étanchéité entre le moule de gel isolant sous-marin et un élément à isoler.

8. Appareil selon l'une quelconque des revendications 4 à 7, dans lequel le moule de gel isolant sous-marin est pré-installé sur un élément à isoler.

9. Appareil selon l'une quelconque des revendications 4 à 7, dans lequel le moule de gel isolant sous-marin est installé par le véhicule actionné à distance.

10. Appareil selon l'une quelconque des revendications 4 à 9, comprenant en outre plusieurs moules de gel isolant et un châssis mobile de déploiement de moule pour la multiplicité de moules de gel isolant.

11. Appareil selon l'une quelconque des revendications 4 à 10, dans lequel le châssis mobile de réservoir de solution d'isolation sous-marine comprend un réservoir de gel souple pour alimenter la solution d'isolation et un tube flexible pour délivrer la solution d'isolation.

12. Appareil selon l'une quelconque des revendications 4 à 11, dans lequel le système d'injection de gel sous-marin est intégré à l'intérieur du châssis du véhicule actionné à distance.

13. Appareil selon l'une quelconque des revendications 4 à 12, dans lequel le système d'injection de gel sous-marin est prévu sur un châssis mobile séparé du véhicule actionné à distance.

14. Appareil selon la revendication 13, dans lequel le châssis mobile du système d'injection de gel sous-marin est monté sur le véhicule actionné à distance.

15. Appareil selon l'une quelconque des revendications 4 à 14, comprenant en outre une pompe de solution d'isolation.

16. Appareil selon l'une quelconque des revendications 4 à 15, comprenant en outre une pompe de catalyseur.

17. Appareil selon l'une quelconque des revendications 4 à 16, comprenant en outre un réservoir de catalyseur.

18. Procédé pour installer une isolation sous-marine comprenant les étapes consistant à :
installer un moule de gel isolant sous-marin sur un élément à isoler ; et
utiliser un véhicule actionné à distance pour pomper une solution d'isolation et un catalyseur dans le moule de gel isolant sous-marin **caractérisé en ce que** la solution d'isolation et le catalyseur sont pompés simultanément dans le moule de gel isolant sous-marin par une buse de mélange.

19. Procédé selon la revendication 18, dans lequel le véhicule actionné à distance installe le moule de gel isolant sous-marin sur l'élément à isoler.

20. Procédé selon la revendication 18 ou la revendication 19, dans lequel le moule de gel isolant sous-marin est choisi dans le groupe comprenant une enceinte en fibre de verre préfabriquée, une enceinte en plastique et une enceinte métallique.

21. Procédé selon l'une quelconque des revendications 18 à 20, dans lequel la solution d'isolation est fournie par un châssis mobile de réservoir de solution d'isolation sous-marine.

22. Procédé selon l'une quelconque des revendications 18 à 21, dans lequel la solution d'isolation et le catalyseur sont pompés dans le moule de gel isolant sous-marin en utilisant une pompe de solution d'isolation pour pomper la solution d'isolation et une pompe de catalyseur pour pomper le catalyseur.

23. Procédé selon l'une quelconque des revendications 18 à 22, dans lequel le moule de gel isolant sous-marin est une enceinte articulée.

24. Procédé selon l'une quelconque des revendications 18 à 23, dans lequel le moule de gel isolant sous-marin comprend des joints, dans lequel les joints fournissent un joint d'étanchéité entre le moule d'isolation en gel sous-marin et l'élément à isoler.

25. Procédé selon l'une quelconque des revendications 18 à 24, dans lequel les moules de gel isolant sous-marins sont fournis par un châssis mobile de déploiement de moule.

26. Procédé selon l'une quelconque des revendications 18 à 25, dans lequel la solution d'isolation et le catalyseur sont pompés à partir d'un système d'injection de gel sous-marin.

27. Procédé selon la revendication 26, dans lequel le système d'injection de gel sous-marin est intégré à l'intérieur du châssis du véhicule actionné à distance.

28. Procédé selon la revendication 26, dans lequel le système d'injection de gel sous-marin est prévu sur un châssis mobile séparé du véhicule actionné à distance.

29. Procédé selon la revendication 28, dans lequel le châssis mobile du système d'injection de gel sous-marin est monté sur le véhicule actionné à distance.
